Europäisches Patentamt

European Patent Office

Office européen des brevets

(19)

(11) Numéro de publication : **0 060 735**
**B1**

## (12) FASCICULE DE BREVET EUROPÉEN

(45) Date de publication du fascicule du brevet :
28.11.84

(21) Numéro de dépôt : 82400189.5

(22) Date de dépôt : 04.02.82

(51) Int. Cl.³ : **F 16 C   1/22**

(54) **Dispositif de fixation sur une paroi de l'extrémité d'une gaine dans laquelle est reçu coulissant un câble de commande.**

(30) Priorité : 27.02.81 FR 8103947

(43) Date de publication de la demande :
22.09.82 Bulletin 82/38

(45) Mention de la délivrance du brevet :
28.11.84 Bulletin 84/48

(84) Etats contractants désignés :
DE FR GB IT

(56) Documents cités :
EP-A- 0 030 494
FR-A- 2 375 489
US-A- 2 730 134

(73) Titulaire : **SOCIETE ANONYME D.B.A.**
**Centre Paris Pleyel**
**F-93521 St-Denis Cedex 01 (FR)**

(72) Inventeur : **Deligny, Jean**
**132, rue du Villaret**
**F-72000 Le Mans (FR)**

(74) Mandataire : **Poidatz, Emmanuel et al**
**Service Brevets Bendix 44 rue François 1er**
**F-75008 Paris (FR)**

EP 0 060 735 B1

## Description

La présente invention a pour objet un dispositif de fixation sur une paroi de l'extrémité d'une gaine dans laquelle est reçu à coulissement un câble de commande, comprenant un embout de gaine associé à ladite extrémité et prévu pour être reçu dans une ouverture ménagée dans la paroi, ladite extrémité de gaine étant reçue de façon coulissante dans un alésage interne de l'embout, ce dernier étant muni de moyens de blocage actionnables à la main lors de l'installation du câble et de la gaine de façon que l'extrémité de la gaine reste immobilisée dans l'embout pendant l'utilisation du câble.

Un tel dispositif est décrit par exemple dans le document US-A-2730134. De tels câbles sont généralement utilisés sur les véhicules automobiles pour commander les freins ou un embrayage à friction. On utilise également ce type de câble pour la commande des boîtes de vitesses, et dans ce dernier cas les câbles utilisés sont du type « pousser-tirer ». Ces câbles sont généralement installés entre deux parois fixes d'un véhicule et les deux embouts d'extrémités de gaine sont prévus pour être reçus chacun dans une ouverture ménagée dans la paroi correspondante. Lorsque les tolérances de fabrication des véhicules deviennent trop importantes, il est parfois difficile, voire impossible, d'effectuer la mise en place du câble sur le véhicule c'est-à-dire d'insérer les deux embouts de gaine dans leur ouverture respective, la longueur de gaine prévue initialement pouvant être trop courte ou trop longue, empêchant ainsi l'installation correcte du câble sur le véhicule.

Dans le but de remédier à cet inconvénient, l'invention propose un dispositif de fixation sur une paroi de l'extrémité d'une gaine de câble de commande, permettant un réglage automatique de la longueur de gaine lors de la mise en place in situ du câble gainé, puis d'immobiliser à demeure la gaine dans la configuration adaptée ainsi obtenue.

Pour ce faire, selon une caractéristique de l'invention, le dispositif de fixation comporte un ressort de réglage prenant appui sur l'embout et sollicitant élastiquement ladite extrémité de gaine en éloignement de ladite paroi lors de la mise en place du câble.

Le document EP-A-0 030 494, publié le 4 juin 1981, décrit par ailleurs une commande mécanique par câble incorporant, au niveau de la fixation d'une extrémité de gaine sur une paroi fixe, un dispositif de rattrapage automatique des jeux apparaissant lors du fonctionnement du dispositif actionné par cette commande, et comportant un organe de commande couplé au câble et actionnant sélectivement, lors de la mise en œuvre du câble, des moyens de blocage pour associer l'extrémité de gaine à son embout de montage dans la paroi fixe lorsque le câble est actionné. Par contre, lors de la mise en place in situ du câble gainé, l'extrémité de gaine est maintenue bloquée vis-à-vis de l'embout pour permettre le réglage de l'organe de commande.

Selon une caractéristique plus particulière de l'invention, les moyens de blocage sont constitués par un système à coincement disposé entre la paroi interne de l'embout, et la surface périphérique externe de l'extrémité de gaine. Dans les modes de réalisation particuliers de l'invention qui seront décrits plus avant, le système à coincement est avantageusement du type à coincement par billes entre une surface de portée tronconique et la surface externe de l'extrémité de gaine.

On décrira maintenant quatre modes de réalisation de l'invention en se référant aux dessins annexés dans lesquels :

La Figure 1 est une vue en coupe axiale d'un premier mode de réalisation du dispositif de fixation selon l'invention ;

La Figure 2 est une vue en coupe axiale d'un deuxième mode de réalisation du dispositif de fixation selon l'invention ;

La Figure 3 est une vue en coupe axiale d'un troisième mode de réalisation d'un dispositif de fixation selon l'invention ;

La Figure 4 est une vue du dispositif de fixation représenté à la Figure 3 après la mise en place du câble de commande et après que le réglage de la longueur de la gaine ait été effectué ; et

La Figure 5 est une vue en coupe axiale d'un quatrième mode de réalisation d'un dispositif de fixation selon l'invention.

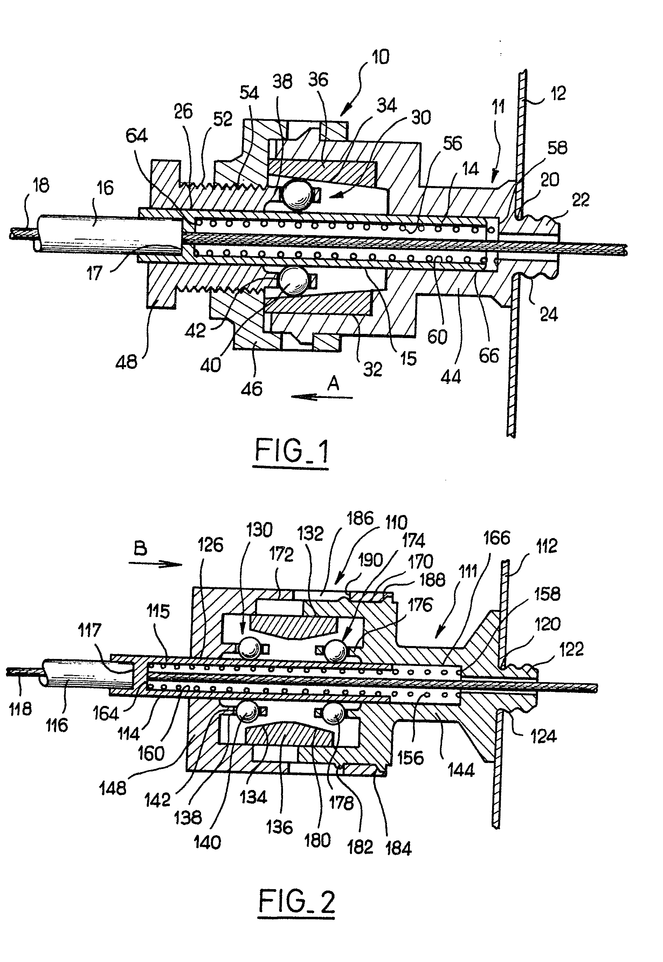

On a représenté à la Figure 1 un dispositif de fixation désigné par la référence générale 10, sur une paroi fixe 12 de l'extrémité 14 d'une gaine de câble 16 dans laquelle un câble de commande 18 est reçu coulissant. Le dispositif de fixation 10 comprend un embout 11 reçu dans une couverture 20 de la paroi dans laquelle il est emboîté à force par l'intermédiaire de son extrémité axiale 22 qui est munie de bourrelets 24 assurant la fixation du dispositif 10 sur la paroi 12. Le câble représenté à la Figure 1, composé de la gaine 16 et du câble proprement dit 18 est du type généralement utilisé pour la commande des embrayages à friction c'est-à-dire du type que l'on utilise pour effectuer un effort de traction sur le câble. L'extrémité de gaine 14 est constitué par une pièce tubulaire métallique rigide fixée à l'extrémité 17 de la gaine 16. L'extrémité de gaine 14 est reçue de façon coulissante dans un alésage interne 26 formé dans le dispositif de fixation. Selon l'invention, le dispositif de fixation 10 est muni de moyens de blocage 30 permettant d'immobiliser axialement l'extrémité de la gaine 14 par rapport à l'embout 11. Le dispositif de blocage 30 est constitué par un système à coincement par billes disposé entre la paroi interne 32 de l'embout 11 et la surface périphérique externe 15 de l'extrémité de gaine 14. Le système à coincement par billes comprend une surface de portée tronconique 34 formée sur la paroi interne 32 de l'embout 11. Dans le mode de réalisation représenté, la portée tronconique 34 est formée sur une bague rapportée 36 montée dans l'alésage interne constituant ladite paroi interne 32 de l'embout 11. Le système à coincement par billes comprend par ailleurs une cage à billes 38 de forme générale tubulaire disposée entre ladite portée tronconique 34 et la surface périphérique externe 15 de l'extrémité de gaine 14, coaxialement à ces dernières. La cage 38 est munie de billes 40 réparties circonférentiellement et disposées dans des alésages radiaux 42 de la cage dans lesquels elles sont montées tournantes. Dans le mode de réalisation représenté à la Figure 1, l'embout de gaine 11 comprend une première partie 44 dont l'extrémité 22 est reçue dans l'ouverture 20, et une seconde partie démontable 48. La première partie d'embout 44 est constituée de deux éléments 44 et 46 emboîtés l'un dans l'autre lors de l'assemblage dudit embout et rendus ainsi solidaires l'un de l'autre. L'embout comprend une seconde partie démontable 48 sur laquelle est fixée la cage à billes 38. Dans le mode de réalisation représenté, la cage à billes 38 et la seconde partie d'embout 48 ne forment qu'une seule pièce montée vissée au moyen du filetage 52 formé à la périphérie de la seconde partie 48 dans un alésage interne fileté 54 du second élément 46 de la première partie d'embout. On comprend que grâce à un tel montage, la seconde partie démontable 48 est susceptible de se déplacer axialement, entraînant avec elle la cage à billes 38, par rapport à la première partie d'embout dans laquelle est formée la portée tronconique 34. Le dispositif de fixation 10 comporte enfin un ressort de réglage 56. Le ressort de réglage 56 est un ressort de compression hélicoïdal monté dans un alésage interne 60 de l'extrémité de gaine 14 et qui prend appui, d'une part sur une surface d'appui 58 formée dans l'embout 11 et d'autre part dans le fond 64 de l'alésage interne 60 de l'extrémité gaine 14. Le ressort de réglage 56 ainsi monté sollicite élastiquement l'extrémité de gaine 14 et donc la gaine 16 en éloignement de la paroi 12, c'est-à-dire dans la direction indiquée par la flèche A de la Figure 1.

Le dispositif de fixation 10 est représenté à la Figure 1 après mise en place du câble de commande sur le véhicule c'est-à-dire lorsque les moyens de blocage constitués par le système à coincement 30 immobilisent l'extrémité de gaine 14 par rapport à l'embout 11 et donc par rapport à la paroi 12. L'installation du dispositif de fixation et du câble sur le véhicule s'effectue de la manière suivante : après avoir dévissé la seconde partie de l'embout 48 par rapport à l'élément 46 de la première partie d'embout jusqu'à ce que l'extrémité de gaine 14 soit libre de coulisser par rapport à l'embout 11, c'est-à-dire dans une position axiale dans laquelle les billes 40 ne sont plus en contact avec la surface de portée tronconique 34 et la surface périphérique externe 15 de l'extrémité de gaine 14, l'opérateur emboîte l'extrémité 22 de l'embout 11 dans l'ouverture de la paroi 20. L'opérateur peut ensuite emboîter un embout de gaine d'un type classique prévu à l'autre extrémité de la gaine 16 (non représentée) dans une ouverture d'une autre paroi du véhicule. Lors de cette mise en place du câble, l'extrémité de gaine 14 est libre de coulisser axialement dans l'alésage interne 26 formé dans la seconde partie 48 de l'embout 11 et dans l'alésage interne coaxial 66 formé dans la première partie d'embout 44. Grâce à ce coulissement, la mise en place du câble est aisée, car on réalise une gaine de longueur variable permettant de s'adapter à toutes les variations de tolérances séparant les deux parois du véhicule dans lesquelles sont montées les extrémités de la gaine. Cette adaptation de la longueur de gaine est facilitée par le ressort de réglage 56 qui sollicite la gaine 16 en éloignement de la paroi 12 et donc en direction de la seconde paroi non représentée. Lorsque cette mise en place est terminée, l'opérateur effectuant le montage du câble n'a plus qu'à déplacer axialement la seconde partie d'embout 48 par rapport à la première partie d'embout 11 en vissant la seconde partie 48 dans l'alésage interne 54 du second élément 46 de la première partie d'embout 44. L'opérateur effectue ce vissage jusqu'à atteindre à nouveau la position représentée à la Figure 1 dans laquelle les billes sont coincées entre la portée tronconique 34 et la surface périphérique externe 15 de l'extrémité de gaine 14. Dans cette position le dispositif de fixation 10 se comporte comme un embout rigide d'une seule pièce permettant de fixer la gaine 16 à la paroi 12.

On a représenté à la Figure 2 un deuxième mode de réalisation d'un dispositif de fixation de gaine sur une paroi. Dans le mode de réalisation représenté à la Figure 2 le câble utilisé est du type pousser-tirer utilisé pour la commande des boîtes de vitesses. Les éléments de la Figure 2 identiques ou équivalents aux éléments déjà représentés à la Figure 1 sont désignés par les mêmes chiffres de référence augmentés de 100. Le dispositif 110 représenté à la Figure 2 comprend un embout 111 constitué d'une première partie d'embout 144 et d'une seconde partie d'embout 148. La première partie d'embout 144 est reçue télescopiquement dans la seconde partie d'embout 148 au moyen de la paroi externe 170 qui coulisse dans l'alésage interne 172 de la seconde partie d'embout 148. Le dispositif de fixation représenté étant destiné à permettre la mise en place d'un câble du type pousser-tirer, il est muni d'un deuxième système à coincement 174, identique au système à coincement 130 mais disposé de façon symétrique par rapport à un plan médian du dispositif 110. Le dispositif 174 comporte en effet une cage à billes 176 munie de billes 178 susceptibles de coopérer avec une surface de portée tronconique 180 formée sur pièce tubulaire rapportée 136 sur laquelle est formée la surface de portée tronconique 134 et avec la paroi périphérique externe 115 de l'extrémité de gaine 114. La position axiale de la seconde partie d'embout 148 montée télescopiquement sur la première partie d'embout 144 est déterminée par des moyens d'immobilisation axiale relative constitués par deux bourrelets 182 et 184 formés à la furface périphérique externe 170 de la première partie d'embout 144, et qui sont susceptibles de coopérer avec une encoche périphérique externe 186 formée dans la seconde partie d'embout 148. La coopération des bourrelets 182 et 184 avec l'encoche externe 186 constitue un système d'encliquetage de la première partie d'embout 144 dans la seconde partie d'embout 148 permettant d'immobiliser axialement la position relative de ces deux éléments. Les différents composants du dispositif de fixation 110 sont représentés à la Figure 2 dans la position qu'ils occupent lors de la mise en place du câble sur véhicule c'est-à-dire avant l'immobilisation axiale de l'extrémité de gaine par rapport à l'embout 111. En cette position et comme on peut le constater à la Figure 2 les systèmes à coincement par billes 130 et 174 sont libres c'est-à-dire que les billes 138 et 182 ne sont pas coincées entre leurs surfaces de portée tronconique respectives 134 et 180 et la surface périphérique externe 115 de l'extrémité de gaine 114. Dans cette position, l'opérateur peut effectuer la mise en place du câble de commande sur le véhicule d'une façon identique à celle qui a été décrite pour le premier mode de réalisation illustré à la Figure 1. Lorsque l'opérateur a effectué la mise en place du câble et que le réglage de la longueur de la gaine s'est effectué automatiquement sous l'action du ressort de réglage 156, l'opérateur doit alors effectuer le blocage des systèmes à coincement par billes 130 et 174. Pour ce faire, l'opérateur sollicite la seconde partie d'embout 148 axialement dans la direction indiquée par la flèche B de la figure 2, à l'encontre de la butée définie par la coopération entre le bourrelet 184 et la surface 186 formée à l'extrémité latérale de la seconde partie 148, jusqu'à ce que le bourrelet 84 vienne coopérer avec la surface latérale d'extrémité 190 de l'encoche périphérique externe 186 en lieu et place du bourrelet 182. On comprend que lorsque les deux éléments occupent cette nouvelle position, le rapprochement des deux cages à billes 38 et 176 provoque le coincement des billes 140 et 178 entre leur surface de portée tronconique respective et la surface péripéhrique externe de l'extrémité de gaine. Pour s'assurer du bon blocage des deux systèmes à coincement à billes 138 et 174, il est bien entendu nécessaire que la course de déplacement séparant les deux bourrelets 182 et 184 soit supérieure ou égale à la distance séparant les points de contact théoriques des billes 140 et 178 avec leurs surfaces de portée tronconique respectives ; il faut de plus monter la pièce rapportée tubulaire 136 coulissante dans l'alésage interne 132 de la première partie d'embout 144.

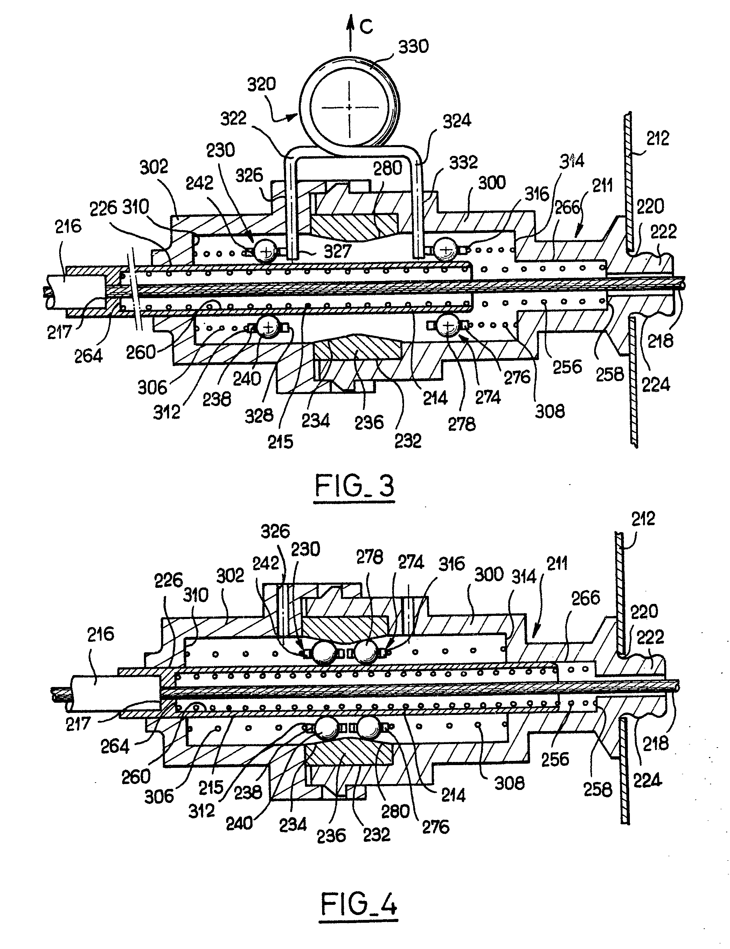

On a représenté aux Figures 3 et 4 un troisième mode de réalisation d'un dispositif de fixation d'une extrémité de gaine de câble de commande sur une paroi. Dans ce troisième mode de réalisation, le câble utilisé est du type tirer-pousser comme celui représenté à la Figure 2. Les éléments du dispositif de fixation représentés aux Figures 3 et 4, identiques ou équivalents du dispositif 110 de la Figure 2, sont désignés par les mêmes références numériques augmentées de 100. Dans ce troisième mode de réalisation, les deux cages à billes 238 et 276 des deux systèmes à coincement par billes 230 et 274, sont montés libres axialement par rapport au corps de l'embout 211 qui dans ce mode de réalisation comporte deux éléments formant boîtier 300 et 302. Selon une caractéristique de l'invention, les cages à billes 238 et 276 sont chacune munie d'un ressort de coincement 306 et 308 respectivement. Le ressort de coincement 306 est un ressort de compression hélicoïdal prenant appui sur une surface d'appui 310 formée dans l'élément 302 de l'embout 11 et sur une surface 240 formée sur la cage à billes 238. Le ressort de coincement 306 ainsi disposé sollicite élastiquement la cage à billes 238 en direction de la surface de portée conique 234 c'est-à-dire dans la direction axiale correspondant au coincement des billes 240 entre la surface de portée tronconique 234 et la paroi périphérique externe 215 de l'extrémité de gaine 214. D'une façon symétrique, le ressort de coincement 308 est un ressort hélicoïdal de compression prenant appui sur les surfaces 314 formées dans le premier élément 300 du boîtier de l'embout 211, et la surface d'appui 316 formée sur l'extrémité de la cage à billes 276. Selon une autre caractéristique de l'invention, et comme on peut le constater à la Figure 3, le dispositif de fixation comprend des moyens de butée amovibles 320, immobilisant axialement les cages à billes 238 et 276 à l'encontre des efforts élastiques exercés par les ressorts de coincement 306 et 308, dans une position, représentée à la Figure 3, dans laquelle les billes 240 et 278 ne sont pas coincées entre les surfaces de portée tronconiques 234 et 280 et la surface périphérique externe 215 de l'extrémité de gaine 214, cette dernière étant libre de coulisser par rapport à l'embout 211 afin de permettre la mise en place du câble sur le véhicule. Les moyens de butée amovibles 320 sont, dans le mode de réalisation représenté, constitués par un élément unique qui regroupe deux moyens de butée amovible 322 et 324 qui coopèrent chacun avec les cages à billes 238 et 276 respectivement. On décrira à titre d'exemple le moyen de butée 322. Le moyen de butée amovible 320 est constitué par une goupille, montée coulissante dans un alésage radial 326 formé dans l'embout 211 et dont l'extrémité 327 coopère avec une surface de butée 328 formée à l'extrémité de la cage 238. Les moyens de butée amovibles 322 et 324 sont reliés par une boucle 330 venue de matière avec ceux-ci qui facilite la suppresion des moyens de butée amovibles après la mise en place du câble sur le véhicule.

Lorsqu'un opérateur a effectué la mise en place du câble sur le véhicule, d'une façon identique à celle qui a été décrite pour les modes de réalisation du dispositif représenté aux Figures 1 et 2, celui-ci exerce une traction sur la boucle 330 des moyens de butée amovibles 320 dans la direction indiquée par la flèche C de la Figure 3 afin d'extraire les goupilles 322 et 324 des alésages respectifs 326 et 332 dans lesquels elles sont reçues. Lorsque l'opérateur a effectué cette opération, les cages à billes 238 et 276 se déplacent axialement jusqu'à venir occuper les positions représentées à la Figure 4. Comme on peut le constater sur cette dernière figure, les billes 240 et 278 sont coincées entre les surfaces de portée tronconique 234 et 280 et la surface périphérique externe 215 de l'extrémité de gaine 214, et sont sollicitées dans cette position par les ressorts de coincement 306 et 308.

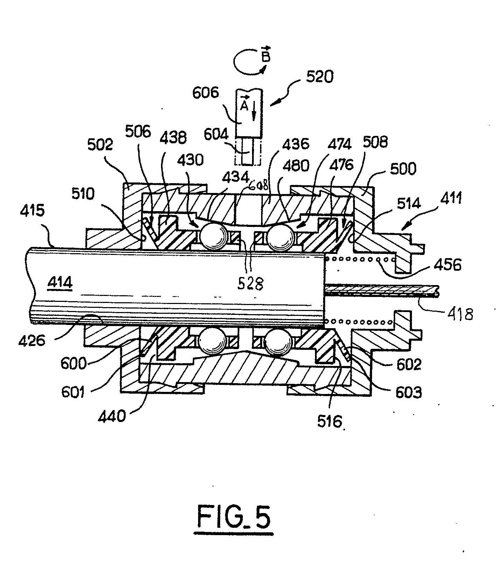

On a représenté à la Figure 5 un quatrième mode de réalisation d'un dispositif de fixation d'une extrémité de gaine de câble de commande sur une paroi. Ce quatrième mode de réalisation est très proche du dispositif représenté aux Figures 3 et 4 et n'en diffère que par des détails de réalisations. Les éléments du dispositif de fixation représenté à la Figure 5 identiques ou équivalents aux éléments du dispositif représenté aux Figures 3 et 4 sont désignés par les mêmes références numériques augmentées de 200.

Dans ce quatrième mode de réalisation, dans lequel le dispositif de fixation est représenté en position fermée de la même manière que le dispositif représenté à la Figure 4, les deux cages à billes 438 et 476 sont chacune munie d'un ressort de coincement 506 et 508 respectivement qui sont venus de matière avec chacune des cages à billes. Dans le mode de réalisation représenté, les cages à billes sont réalisées en matière plastique et les ressorts 506 et 508 sont constitués par des languettes 600 et 602 venues de matière avec les cages 438 et 476. Les languettes 600 et 602 s'étendent depuis les parois d'extrémité latérales 440 et 516 des cages 438 et 476 et prennent appui par leurs extrémités libres 601 et 603 sur les faces d'appui 510 et 514 formées dans les moitiés d'embout 502 et 500. Une telle réalisation des ressorts de coincement 10 permet de réduire le nombre de composants du dispositif et par là même son prix de revient.

De plus les moyens de butées amovibles 520 sont constitués par l'extrémité 604 d'un outil tel qu'un tournevis 606 qui peut être introduite dans un alésage radial 608 formé dans la pièce tubulaire rapportée 436. Lorsque l'opérateur introduit l'extrémité 604 du tournevis dans l'alésage 608 selon la flèche A et qu'il lui fait effectuer une rotation d'un quart de tour selon la flèche B, l'extrémité 604 vient coopérer avec les surfaces de butée 528 formées sur les cages 438 et 436 et provoquent ainsi leur écartement. Dans cette position, analogue à celle représentée à la Figure 3 pour le dispositif 211, la gaine 414 est libre de coulisser dans l'alésage 426 afin de permettre le réglage de la longueur de cette dernière. Lorsque l'opérateur retire le tournevis 606 de l'alésage 608, les cages, sous l'action élastique des ressorts 506 et 508 viennent à nouveau occuper leur position représentée à la Figure 5 dans laquelle la gaine 414 est immobilisée axialement par rapport au dispositif 211.

L'invention ne se limite pas aux modes de réalisations qui viennent d'être décrits et chacun d'eux peut notamment être adapté aux deux types de câble mentionnés plus haut, par exemple, le dispositif représenté à la Figure 2 peut être simplifié pour être monté sur un câble du type tirer seulement, en supprimant le deuxième système à coincement par billes 274 et en immobilisant la position de l'élément tubulaire rapporté 136 sur laquelle est formée la portée d'appui tronconique, par rapport à la première partie d'embout 144.

Il faut de plus noter que dans les modes de réalisation représentés aux Figures 1 et 2, l'utilisation d'un embout en deux parties démontables 44, 48 et 144, 148, permet à l'opérateur qui aurait effectué une mauvaise mise en place du câble de recommencer l'opération de mise en place. Pour ce faire, il doit simplement dévisser la partie d'embout vissée 48 jusqu'à ce que les billes soient décoincées et que l'extrémité de gaine 14 soit à nouveau libre de coulisser par rapport à l'embout 11. Dans le cas de la Figure 2, l'opérateur doit déboîter la seconde partie d'embout 148 par rapport à la première partie d'embout 144 afin que les deux parties occupent à nouveau la position relative représentée à la Figure 2 dans laquelle l'extrémité de gaine 114 est libre de coulisser par rapport à l'embout 111.

**Revendications**

1. Dispositif de fixation (10, 110, 210) sur une paroi (12, 112, 212) de l'extrémité (14, 114, 214, 414) d'une gaine (16, 116, 216) dans laquelle reçu coulissant un câble de commande (18, 118, 218, 418) comprenant un embout de gaine (11, 111, 211, 411) associé à ladite extrémité et prévu pour être reçu dans une ouverture (20, 120, 220) ménagée dans la paroi, ladite extrémité de gaine étant reçue de façon coulissante dans un alésage interne (26, 126, 226, 426) de l'embout, ce dernier étant muni de moyens de blocage (30, 130, 230, 430) actionnables à la main lors de l'installation du câble et de la gaine de façon que l'extrémité de la gaine reste immobilisée dans l'embout (11, 111, 211, 411) pendant l'utilisation du câble, caractérisé en ce qu'il comporte un ressort de réglage (56, 256, 356) prenant appui sur l'embout et sollicitant élastiquement ladite extrémité de gaine en éloignement de ladite paroi lors de la mise en place du câble.

2. Dispositif selon la revendication 1, caractérisé en ce que les moyens de blocage sont constitués par un système à coincement (30, 130, 230) disposé entre la paroi interne (32, 132, 232) de l'embout et la surface périphérique externe (15, 115, 215) de l'extrémité de gaine.

3. Dispositif selon la revendication 2, caractérisé en ce que le système à coincement (30, 130, 230) comprend une portée d'appui tronconique (34, 134, 234) formée sur la paroi interne (32, 132, 232) de l'embout et une cage à billes (38, 138, 238) disposée entre la surface périphérique externe et la portée tronconqiue, coaxialement à ces dernières, la cage étant déplacée axialement manuellement par rapport à la portée tronconique, après la mise en place du câble, pour immobiliser axialement l'extrémité de gaine par rapport à l'embout par coincement des billes de la cage entre la portée tronconique et la paroi externe de l'extrémité de gaine.

4. Dispositif selon la revendication 3, caractérisé en ce que l'embout (11, 111) comprend une première partie d'embout prévue pour être reçue dans l'ouverture de la paroi et dans laquelle est formée la portée tronconique, et une seconde portée d'embout démontable (48, 148) sur laquelle est fixée la cage à billes, la seconde partie étant susceptible d'être déplacée axialement à la main par rapport à la première partie pour effectuer l'immobilisation axiale de l'extrémité de gaine par rapport à l'embout.

5. Dispositif selon la revendication 4, caractérisé en ce que la seconde partie d'embout (48) est montée vissée dans la première partie d'embout (44), le déplacement axial de la seconde partie par rapport à la première partie s'effectuant par vissage.

6. Dispositif selon la revendication 4, caractérisé en ce que les première et seconde parties d'embout (144, 148) sont télescopiques et en ce qu'elles sont munies de moyens d'immobilisation axiale relative (182, 184, 186).

7. Dispositif selon la revendication 3, caractérisé en ce qu'il comporte un ressort de coincement (306) prenant appui sur ledit embout (302) pour solliciter élastiquement ladite cage à billes (238) dans la direction axiale correspondant au coincement, et des moyens de butée amovibles immobilisant axialement ladite cage (238) à l'encontre de l'effort exercé par ledit ressort de coincement (306) pour permettre le positionnement libre de ladite extrémité de gaine par rapport à l'embout lors de la mise en place du câble de commande, lesdits moyens de butée amovibles étant ôtés après la mise en place du câble.

8. Dispositif selon la revendication 7, caractérisé en ce que lesdits moyens de butée amovibles (320) sont constitués par une goupille (322) montée coulissante dans un alésage radial (326) dudit embout et dont l'extrémité (327) coopère avec une surface de butée (328) formée sur ladite cage.

9. Dispositif selon la revendication 7, caractérisé en ce que ledit ressort de coincement (506) est venu de matière avec ladite cage à billes (438).

10. Dispositif selon la revendication 9, caractérisé en ce que ladite cage à billes (438) est réalisée en matière plastique, ledit ressort de coincement étant constitué par une languette (600) s'étendant depuis une face latérale d'extrémité (440) de ladite cage et dont l'extrémité libre (601) prend appui sur ledit embout (302).

11. Dispositif selon la revendication 7, caractérisé en ce que lesdits moyens de butée amovibles (520) sont constitués par l'extrémité (604) d'un outil qui est susceptible d'être introduite dans un alésage radial (608) formé dans ledit embout pour venir coopérer avec des surfaces de butée formées sur lesdites cages à billes.

## Claims

1. A device (10, 110, 210) for anchoring on a wall (12, 112, 212) the extremity (14, 114, 214, 414) of a sleeve (16, 116, 216) slindingly receiving a control cable (18, 118, 218, 418), comprising a sleeve socket (11, 111, 211, 411) associated with said extremity and provided to be received within an opening (20, 120, 220) formed in the wall, said extremity of the sleeve being slindingly received in an internal bore (26, 126, 226, 426) of the socket, the latter being provided with locking means (30, 130, 230, 430) adapted to be manually actuated during assembly of the cable and the sleeve such that the extremity of the sleeve will remain fixed in the socket (11, 111, 211, 411) during use of the cable, characterized in that it comprises a regulating spring (56, 256, 356) supported against the socket and resiliently biasing said extremity of the sleeve away from said wall during assembly of the cable.

2. A device according to claim 1, characterized in that said locking means are comprised of a clamping system (30, 130, 230) disposed between the internal wall (32, 132, 232) of the socket and the external peripheral surface (15, 115, 215) of the extremity of the sleeve.

3. A device according to claim 2, characterized in that the clamping system (30, 130, 230) comprises a truncated abutment (34, 134, 234) formed on the internal wall (32, 132, 232) of the socket and a ball cage (38, 138, 238) disposed between the external peripheral surface and the truncated abutment, coaxially of the latter, the cage being manually axially displaced with respect to the truncated abutment after assembly of the cable for axially immobilizing the extremity of the sleeve with respect to the socket by clamping balls of the cage between the truncated abutment and the external wall of the sleeve extremity.

4. A device according to claim 3, characterized in that the socket (11, 111) comprises a first portion adapted to be received in the opening of the wall and including the truncated abutment, and a second removable portion (48, 148) on which the ball cage is mounted, the second portion being adapted to be manually displaced in an axial direction with respect to the first portion for axially immobilizing the extremity of the sleeve with respect to the socket.

5. A device according to claim 4, characterized in that the second portion (48) of the socket is threadably mounted in the first portion (44) of the socket, the axial displacement of the second portion with respect to the first portion being effected by a threading movement.

6. A device according to claim 4, characterized in that the first and second portion (144, 148) of the socket are telescopically received within each other and in that they are provided with means (182, 184, 186) for preventing axial relative movement thereof.

7. A device according to claim 3, characterized in that it comprises a clamping spring (306) engaging said socket (302) for resiliently biassing said ball cage (238) in an axial direction corresponding to clamping, and removable abutment means preventing an axial movement of the cage (238) against the force exerted by said clamping spring (306) in order to allow for free positioning of said extremity of the sleeve with respect to the socket during assembly of the control cable, said removable abutment means being removed after assembly of the cable.

8. A device according to claim 7, characterized in that said removable abutment means (120) are comprised by a pin (322) slidingly mounted in a radial bore (326) of said socket and having one end (327) cooperate with an abutment surface (328) formed on said cage.

9. A device according to claim 7, characterized in that said clamping spring (506) is made of the material of said ball cage (438).

10. A device according to claim 9, characterized in that said ball cage (438) is made of plastic material, said clamping spring being comprised of a tongue (600) extending from one lateral end face (440) of said cage and having its free end (601) engaging said socket (302).

11. A device according to claim 7, characterized in that said removable abutment means (520) are comprised by the end (604) of a tool which is adapted to be introduced in a radial bore (608) formed in said socket in order to cooperate with abutment surfaces formed on said ball cages.

## Ansprüche

1. Vorrichtung (10, 110, 210) zur Befestigung des Endes (14, 114, 214, 414) einer ein Steuerkabel (18, 118, 218, 418) gleitend aufnehmenden Kabelhülle (16, 116, 216) mit einem Hüllenendstück (11, 111, 211, 411), das dem besagten Ende zugeordnet ist und in einer in der Wand gebildeten Öffnung (20, 120, 220) aufnehmbar ist, wobei das Ende der Kabelhülle in einer Innenbohrung (26, 126, 226, 426) des Endstückes gleitend aufgenommen ist, wobei das letztere mit Verriegelungsmitteln (30, 130, 230, 430) versehen ist, die beim Einbau des Kabels und der Kabelhülle von Hand so betätigbar sind, daß das Ende der Kabelhülle bei Gebrauch des Kabels im Endstück (11, 111, 211, 411) festgelegt bleibt, dadurch gekennzeichnet, daß sie eine Regelfeder (56, 256, 356) aufweist, die am Endstück anliegt und das besagte Ende der Kabelhülle beim Einbau des Kabels elastisch von der Wand wegdrückt.

2. Vorrichtung nach Anspruch 1, dadurch gekennzeichnet, daß die Verriegelungsmittel aus einer Klemmeinrichtung (30, 130, 230) bestehen, die zwischen der Innenwand (32, 132, 232) des Endstückes und der äußeren Umfangsfläche (15, 115, 215) des Endes der Kabelhülle angeordnet ist.

3. Vorrichtung nach Anspruch 2, dadurch gekennzeichnet, daß die Klemmeinrichtung (30, 130, 230) eine kegelstumpfförmige Anlagefläche (34, 134, 234) aufweist, die an der Innenwand (32, 132, 232) des Endstückes gebildet ist, sowie einen Kugelkäfig (38, 138, 238), der zwischen der äußeren Umfangsfläche und der kegelstumpfförmigen Anlagefläche, koaxial zu diesen, angeordnet ist, wobei der Käfig nach dem Einbau des Kabels von Hand bezüglich der kegelstumpfförmigen Anlagefläche axial verschoben wird, um durch Einklemmen von Kugeln des Käfigs zwischen der kegelstumpfförmigen Anlagefläche und der äußeren Wand des Hüllenendes das Hüllenende bezüglich des Endstückes festzulegen.

4. Vorrichtung nach Anspruch 3, dadurch gekennzeichnet, daß das Endstück (11, 111) einen in der Öffnung der Wand aufnehmbaren ersten Abschnitt, in den die kegelstumpfförmige Anlagefläche gebildet ist, sowie einen abnehmbaren zweiten Abschnitt (48, 148) aufweist, an dem der Kugelkäfig befestigt ist, wobei der zweite Abschnitt bezüglich des ersten Abschnittes von Hand axial verschiebbar ist, um das Ende der Kabelhülle bezüglich des Endstückes axial festzulegen.

5. Vorrichtung nach Anspruch 4, dadurch gekennzeichnet, daß der zweite Abschnitt (48) des Endstückes in den ersten Abschnitt (44) eingeschraubt ist, wobei die axiale Verschiebung des zweiten Abschnittes bezüglich des ersten Abschnittes durch eine Schraubbewegung erfolgt.

6. Vorrichtung nach Anspruch 4, dadurch gekennzeichnet, daß der erste und zweite Abschnitt (144, 148) des Endstückes teleskopierbar und mit Mitteln (182, 184, 186) zum axialen Festlegen der beiden relativ zueinander versehen sind.

7. Vorrichtung nach Anspruch 3, dadurch gekennzeichnet, daß sie eine Klemmfeder (306) aufweist, die an dem Endstück (302) angreift, um den Kugelkäfig (238) in axialer Richtung im Sinne eines Klemmens elastisch vorzuspannen, und entfernbare Anschlagmittel, die den Käfig (238) axial festlegen entgegen der Kraft, die von der Klemmfeder (306) augeübt wird, um beim Einbau des Steuerkabels eine freie Positionierung des besagten Endes des Kabelhülle bezüglich des Endstückes zu ermöglichen, wobei die entfernbaren Anschlagmittel nach dem Einbau des Kabels entfernt werden.

8. Vorrichtung nach Anspruch 7, dadurch gekennzeichnet, daß die entfernbaren Anschlagmittel (320) von einem Stift (322) gebildet werden, der in einer radialen Bohrung (326) des Endstückes gleitend gelagert ist und dessen Ende (327) mit einer Anschlagfläche (328) am Käfig zusammenwirkt.

9. Vorrichtung nach Anspruch 7, dadurch gekennzeichnet, daß die Klemmfeder (506) aus dem Material des Kugelkäfigs (438) gebildet ist.

10. Vorrichtung nach Anspruch 9, dadurch gekennzeichnet, daß der Kugelkäfig (438) aus Kunststoff besteht, wobei die Klemmfeder von einer Zunge (600) gebildet wird, die von einer seitlichen Endfläche (440) des Käfigs absteht und deren freies Ende (601) an dem Endstück (302) anliegt.

11. Vorrichtung nach Anspruch 7, dadurch gekennzeichnet, daß die entfernbaren Anschlagmittel (520) von dem Ende (604) eines Werkzeuges gebildet werden, das in eine radiale Bohrung (608) des Endstückes einführbar ist, um mit Anschlagflächen an den Kugelkäfigen zusammenzuwirken.

FIG_1

FIG_2

FIG_3

FIG_4

FIG. 5